# EUROPEAN PATENT APPLICATION

(11) **EP 4 129 929 A1**
(43) Date of publication of application: **08.02.2023**
(21) Application number: 20929009.7
(22) Date of filing: 09.12.2020
(51) Int. Cl.: C02F 1/469

(54) **CAPACITIVE DEIONIZATION ELECTRODE LAMINATE AND METHOD FOR MANUFACTURING SAME**

(30) Priority: 03.04.2020 KR 20200040781
(71) Applicant: Siontech Co., Ltd., Daejeon 34025 (KR); Kyungdong Navien Co., Ltd., Pyeongtaek-si, Gyeonggi-do 17704 (KR)
(72) Inventor: KIM, Miyang, Daejeon 35245 (KR); KANG, Kyungseok, Daejeon 34125 (KR); LEE, Kyunghan, Daejeon 34304 (KR); RYOO, Bo Hyung, Daejeon 35226 (KR)
(74) Representative: Stolmár & Partner Patentanwälte PartG mbB
(86) International application number: PCT/KR2020/017969
(87) International publication number: WO 2021/201373

(57) **Abstract**

Provided are a capacitive deionization electrode and a method of manufacturing the same, which have an effect of providing a capacitive deionization electrode at a low cost as compared with the conventional technology while having a high level of deionization performance and durability.

## Description

### [Technical Field]

The present disclosure relates to a capacitive deionization electrode.

### [Background Art]

A technology of removing salts in water using a membrane includes a reverse osmotic membrane method, an electrodialysis method, a capacitive deionization (CDI) method, and the like. Among various membrane separation technologies, a capacitive deionization technology is a technology of removing ions in water including various ions, and has excellent deionization efficiency at a low concentration of 3,000 ppm or less, higher energy efficiency than other membrane separation technologies, and a high water recovery rate. Specifically, the capacitive deionization technology requires deionization efficiency depending on the use of water, and may adjust an ion removal rate according to the use.

For example, the ion removal rate may be adjusted so that an appropriate content of ions (mineral) for enhancing the taste of coffee is contained for a coffee machine use. In addition, it may be used in a water softener, water purifier, and the like for a household use, and may be used in boiler pipe water, cooling tower water, industrial reuse water, and the like for a commercial use.

The principle of the capacitive deionization technology is as follows: when a charge is applied to both ends of a carbon electrode to which active carbon is applied, on graphite (current collector), ions in water are adsorbed to active carbon by the action of electrical attraction, and when ion adsorption of the carbon electrode is in the state of being saturated, an opposite charge is applied, so that ions adsorbed to the carbon electrode are desorbed from the carbon electrode by a charge repulsive force to regenerate the electrode. Here, ions instantaneously escaping from the carbon electrode are adsorbed again to a counter electrode by the action of applied attraction with the electrode.

In the capacitive deionization technology, an ion exchange membrane for increasing electrode efficiency in the process of regenerating the electrode, and the ion exchange membrane serves as an ion barrier and serves to protect active carbon so that a side reaction due to an oxidizing material does not occur in the carbon electrode in water.

However, since the cost of the ion exchange membrane accounts for a very high proportion in the capacitive deionization electrode, mass use or use in large-scale water treatment plants is limited in reality, and thus, a capacitive deionization electrode having excellent economic feasibility to allow mass production at a low cost while having a high level of deionization performance, and a manufacturing technology thereof are demanded.

### [Related Art Documents]

### [Patent Documents]

(Patent Document 1) Korean Patent Laid-Open Publication No. 10-2018-0115825 (October 24, 2018)

### [Disclosure]

### [Technical Problem]

An object of the present disclosure is to provide a capacitive deionization electrode having a high level of deionization performance and durability at a low cost, and a method of manufacturing the same.

A specific object of the present disclosure is to provide a capacitive deionization electrode having relatively high durability and high deionization performance even with a significantly decreased cost as compared with the conventional technology by minimizing the ratio of a relatively high-cost ion exchange layer, and a method of manufacturing the same.

### [Technical Solution]

In one general aspect, a capacitive deionization electrode laminate includes: a porous substrate layer, and an ion exchange layer laminated on one or both surfaces of the porous substrate layer, wherein the inside of pores of the porous substrate is filled with a crosslinked hydrophilic polymer.

In an exemplary embodiment of the present disclosure, the hydrophilic polymer may include a vinyl alcohol-based polymer.

In an exemplary embodiment of the present disclosure, the crosslinked hydrophilic polymer may be formed by reacting the vinyl alcohol-based polymer with a crosslinking agent.

In an exemplary embodiment of the present disclosure, the crosslinking agent may include any one or more selected from aldehyde-based compounds and amine-based compounds.

In an exemplary embodiment of the present disclosure, the porous substrate layer may have an average thickness of 5 to 50 um.

In an exemplary embodiment of the present disclosure, the porous substrate layer may have an average pore size of 0.05 to 50 um and a porosity of 20 to 70%.

In an exemplary embodiment of the present disclosure, an average thickness of the ion exchange layer is not particularly limited, but may be 0.1 to 30 um.

In an exemplary embodiment of the present disclosure, the porous substrate layer may have a material including a hydrophobic polymer.

In another general aspect, a capacitive deionization electrode includes: the capacitive deionization electrode laminate and a carbon electrode laminated on one or both surfaces of the laminate.

In still another general aspect, a method of manufacturing a capacitive deionization electrode laminate includes: an impregnation step of impregnating a porous substrate layer with a hydrophilic polymer solution; a crosslinking step of coating the hydrophilic polymer-coated porous substrate layer with a crosslinking solution to form a crosslinked hydrophilic polymer inside pores of the porous substrate layer; and an ion exchange layer formation step of coating one or both surfaces of the porous substrate layer filled with the crosslinked hydrophilic polymer with an ion exchange resin solution.

In an exemplary embodiment of the present disclosure, the hydrophilic polymer may include a vinyl alcohol-based polymer.

In an exemplary embodiment of the present disclosure, in the crosslinking step, the crosslinking agent may include any one or more crosslinking agents selected from aldehyde-based compounds and amine-based compounds.

### [Advantageous Effects]

The capacitive deionization electrode and the method of manufacturing the same according to the present disclosure have an effect of providing a capacitive deionization electrode at a low cost as compared with the conventional technology while having a high level of deionization performance and durability.

Specifically, the capacitive deionization electrode and the method of manufacturing the same according to the present disclosure are a capacitive deionization electrode having relatively high durability and high deionization performance even with a significantly decreased cost as compared with the conventional technology by minimizing the ratio of a relatively high-cost ion exchange layer, and a method of manufacturing the same.

### [Best Mode]

Hereinafter, the capacitive deionization electrode laminate having excellent economic feasibility and the method of manufacturing the same according to the present disclosure will be described in detail.

Technical terms and scientific terms used in the present specification have the general meaning understood by a person skilled in the art unless otherwise defined, and description for the known function and configuration obscuring the present disclosure will be omitted in the following description.

The singular form of the term used herein may be intended to also include a plural form, unless otherwise indicated.

The unit of % used herein without particular mention refers to % by weight, unless otherwise defined.

The term "layer" or "film" mentioned in the present specification means that each material forms a continuum and has a dimension having a relatively small thickness to a width and a length. Accordingly, it should not be interpreted as a two-dimensional flat plane by the term "layer" or "film".

The capacitive deionization electrode laminate according to the present disclosure includes a porous substrate layer, and an ion exchange layer laminated on one or both surfaces of the porous substrate layer, wherein the inside of pores of the porous substrate is filled with a crosslinked hydrophilic polymer, thereby having an effect of relatively high durability and high deionization performance even with significantly decreased weight and cost of the ion exchange polymer used during ion exchange, as compared with the conventional technology.

The inside of pores of the porous substrate layer is filled with a crosslinked hydrophilic polymer, and when the hydrophilic polymer is not crosslinked, durability is significantly poor of course, and deionization performance is significantly decreased. Therefore, in order to achieve the object of the present disclosure, the hydrophilic polymer filled into the pore of the porous substrate layer should be a crosslinked hydrophilic polymer. In addition, since the inside of pores of the porous substrate layer is filled with the crosslinked polymer, high deionization performance may be imparted without a separate hydrophilization treatment such as a plasma treatment to increase a process cost.

The "hydrophilic polymer" mentioned in the present specification may be various kinds, and for example, may be vinyl alcohol-based polymers such as polyvinyl alcohol (PVA) and polyvinyl pyrrolidone (PVP), acid-based polymers such as polyacrylic acid (PAA) and chitosan, oxide-based polymers such as polyethylene oxide (PEO), and the like. It is preferred to use a vinyl alcohol-based polymer, more preferably polyvinyl alcohol, for further improving durability and deionization performance with high economic feasibility.

Therefore, it is preferred that the crosslinked hydrophilic polymer is formed by reacting the vinyl alcohol-based polymer with a crosslinking agent, in terms of manufacturing at a low cost and further improving durability and deionization performance.

The "crosslinking agent" mentioned in the present specification may be any one as long as it may crosslink the hydrophilic polymer, and for example, may include any one or two or more selected from aldehyde-based compounds such as glutaraldehyde (GA), amine-based compounds such as diallylamine and triallylamine, boric acid (BA), citric acid (CA), phosphoric acid (PA), and the like. However, aside from this, various crosslinking agents may be used as long as they may perform a crosslinking reaction to crosslink hydrogel and the like, and the present disclosure should not be construed as being limited to the crosslinking agent described above.

As a non-limiting example, since a material having ion exchange performance may be substantially absent and excluded inside the pores of the porous substrate layer, the content of a relatively high cost ion exchange ionomer used may be minimized, and in particular, since the inside of pores is filled with a crosslinked hydrophilic polymer as a specific material, deionization efficiency is high and also the weight of the ion exchange ionomer used may be minimized without a significant decrease of deionization performance.

It is preferred that the porous substrate layer is a material including a hydrophobic polymer, specifically, a hydrophobic polymer material in terms of having high durability. Since the inside of pores of the porous substrate layer made of a hydrophobic polymer material is filled with a crosslinked hydrophobic polymer, it has durability to continuously maintain high deionization performance for a long time. As an example of the material of the porous substrate layer, any one or two or more selected from polyolefin-based, cellulose-based, organic and inorganic hybrid-based polymers in which an inorganic particle layer is formed on a porous substrate layer, and the like may be included. A specific example of the polyolefin may include polyethylene, polypropylene, and the like. In addition, various materials may be used as long as they secure durability, specifically, are hydrophobic polymer materials.

The porous substrate layer may have an average pore size of 0.005 to 50 um, specifically, 0.01 to 30 µm, and more specifically, 0.1 to 20 um. In addition, the porous substrate layer may have a porosity of 20 to 80%, specifically 30 to 80%, and more specifically, 40 to 60%. When these are satisfied, the porous substrate layer may have sufficient durability, decrease resistance of the ion exchange layer during deionization, and maintain high deionization performance.

The porous substrate layer may have an average thickness of 5 to 50 um, specifically 10 to 30 um. When it is satisfied, the porous substrate layer may have mechanical properties such as bending properties and impact strength to maximize deionization performance while having excellent durability.

Since the average thickness of the ion exchange layer may be appropriately controlled depending on cost, deionization performance, and the like, it is not largely limited, and may be, for example, 0.1 to 30 um. When it is satisfied, high deionization performance may be implemented without an excessive cost increase.

The ion exchange layer is a cation exchange layer or an anion exchange layer, and a cation exchange layer or an anion exchange layer may be positioned on both surfaces of the porous substrate layer, or the cation exchange layer and the anion exchange layer may be positioned, respectively, on both surfaces of the porous substrate layer. The cation exchange layer or the anion exchange layer may be positioned depending on the selection of various structures such as a series or parallel structure of a unit cell of the capacitive deionization electrode. As a specific example, the main chain of the polymer of the ion exchange layer may be various, such as those having a cation exchange group or an anion exchange group. As a specific example, the polymer may be polystyrene, polysulfone, polyethersulfone, polyphenylene oxide, polyetheretherketone, polyamide, polyester, polyimide, polyether, polyethylene, polytetrafluoroethylene, polyglycidylmethacrylate, and the like, but is not limited thereto, of course. An example of the cation exchange group may include -SO₃⁻, -COO⁻, -PO₃²⁻, -PO₃H⁻, and the like, and an example of the anion exchange group may include - NH₃⁺, -NRH₂⁺, -NR₂H⁺, -NR₃⁺, -PR₃⁺, -SR₂⁺, and the like. Herein, R may have various kinds of substituents, and for example, may be a hydrocarbon group, specifically, a hydrocarbon group having 1 to 5 carbon groups.

The ion exchange layer is formed of a polymer having an ion exchange group, as described above, and its weight average molecular weight is not limited as long as deionization performance may be imparted, and for example, it may be 5,000 to 500,000 g/mol. However, this is described as a specific example, and the present disclosure is not interpreted as being limited thereto.

The present disclosure may provide a capacitive deionization electrode, and the capacitive deionization electrode according to an exemplary embodiment of the present disclosure may include: the capacitive deionization electrode laminate and a carbon electrode laminated on one or both surfaces of the laminate. As a specific example, a structure laminated in the order of a cation exchange layer, a capacitive deionization electrode laminate, and a cation exchange layer, a structure laminated in the order of an anion exchange layer, a capacitive deionization electrode laminate, and an anion exchange layer, and a structure laminated in the order of a cation exchange layer, a capacitive deionization electrode laminate, and an anion exchange layer may be included. In addition, a plurality of unit cells having the lamination structure are arranged in series or in parallel, so that a deionization treatment may be performed on a large scale. A more specific structure or form of the capacitive deionization electrode may refer to previously known documents.

The capacitive deionization electrode according to an exemplary embodiment of the present disclosure may further include a spacer so that a treatment water flows well. The spacer may refer to a structure in which a flow path being a space to allow the treatment water to flow is formed, the material may be any one to support the structure without affecting the treatment water, and the space is well known in the art, and thus, any known spacer may be used. As a specific example, a flow path structure of the spacer may have various structures such as triangle, semi-ellipse, semicircle, trapezoid, quadrangle, spiral, grid (net), cone, cylinder, comb pattern, wavy, stripe, grid pattern, and dot pattern. An average thickness of the spacer may be freely adjusted, and for example, may be in a range of 0.5 to 5,000 mm, but is not interpreted to be limited thereto, of course.

The spacer may be appropriately disposed in various structures depending on the required purpose and used. As an example, the spacer may be disposed close to or adjacent to one or both surfaces of the capacitive deionization electrode laminate according to the present disclosure, and a pair of carbon electrodes may be disposed with the spacer interposed therebetween.

In addition, the capacitive deionization electrode laminate and the capacitive deionization electrode including the same according to the present disclosure have no limitation in their size and specification, and may be appropriately adjusted depending on the use application, use environment, use scale, and the like.

The carbon electrode is a carbon-containing layer which imparts conductivity, and a carbon layer may be used as it is as an electrode, or an electrode having a carbon layer coated on one or both surfaces of a current collector may be used. As a specific example, the carbon layer may be formed by applying an electrode slurry including a carbon material and a solvent on a current collector. Here, the solvent may be various, and for example, may be an organic solvent including any one or two or more selected from N-methyl-2-pyrrolidone, dimethylformamide, dimethylacetamide, acetone, chloroform, dichloromethane, trichloroethylene, ethanol, methanol, normal hexane, and the like.

The carbon material may be any carbon-based material which imparts conductivity, and for example, may include any one or two or more selected from active carbon powder, active carbon fiber, graphite, carbon black, carbon nanotubes, carbon aerogel, acetylene black, ketjen black, XCF carbon, SFR carbon, and the like. In addition, various carbon materials forming the carbon layer may be used.

The average thickness of the carbon layer may be 50 to 500 um in terms of minimizing electric resistance and increasing deionization efficiency, but is not limited thereto, and may be appropriately adjusted.

The current collector may be any conductive material, and various known materials may be appropriately used. For example, any one material or an alloy including two or more selected from graphite, aluminum, nickel, copper, titanium, iron, stainless steel, and the like may be included. In addition, the current collector may have various forms such as a sheet, a thin film, a plain weave net, and the like, and since its average thickness is appropriately adjusted, it is not limited, and for example, may be 10 to 5,000 um.

The method of manufacturing a capacitive deionization electrode laminate according to the present disclosure includes: an impregnation step of impregnating a porous substrate layer with a hydrophilic polymer solution, a crosslinking step of coating the hydrophilic polymer-coated porous substrate layer with a crosslinking solution to form a crosslinked hydrophilic polymer inside pores of the porous substrate layer, and an ion exchange layer formation step of coating one or both surfaces of the porous substrate layer filled with the crosslinked hydrophilic polymer with an ion exchange resin solution.

In the capacitive deionization electrode laminate according to the present disclosure, when the inside of pores of the porous substrate layer is not filled with the crosslinked hydrophilic polymer, or the polymer is a non-crosslinked polymer different from the crosslinked hydrophilic polymer, the deionization performance may not be excellent. Besides, a polymer may shrink in the drying (curing) of the polymer having an ion exchange group during the subsequent manufacturing process, and then the ion exchange layer may not be formed in a flat and even, normal shape.

In the impregnation step, the porous substrate layer is impregnated with the hydrophilic polymer solution, thereby filling the internal pores of the porous substrate layer with the hydrophilic polymer solution. Here, the pore surface of the porous substrate layer may be coated with the hydrophilic polymer solution.

The hydrophilic polymer solution includes a hydrophilic polymer and a solvent, and the solvent may be any solvent in which the hydrophilic polymer may be dissolved, and as an example, may be water, an organic solvent, or a mixed solvent thereof. Here, the content of the hydrophilic polymer is not largely limited, but for example, may be 5 to 30 wt%, specifically 10 to 20 wt% of the hydrophilic polymer with respect to the total weight of the hydrophilic polymer solution. However, this is described as a preferred example, and the present disclosure is not interpreted as being limited thereto.

The hydrophilic polymer may have a low polymerization degree, and it is preferred to have a weight average molecular weight of, for example, 3,000 g/mol or less, specifically 300 to 3,000 g/mol, more specifically 500 to 2,000 g/mol, and more specifically 800 to 2,000 g/mol. When this is satisfied, the hydrophilic polymer may easily penetrate and be filled into the pores of the porous substrate, and a binding force with the inner surface of the pores is further improved to not only have high durability, but also further improve deionization performance. As a preferred example, when the material of the porous substrate layer is a hydrophilic polymer and the hydrophobic polymer has the weight average molecular weight in the above range, the porous substrate layer has high durability, and the hydrophilic polymer adheres better to the inner surface of the pores of the porous substrate layer having a hydrophobic surface and is crosslinked therein, thereby imparting high structural stability and higher deionization performance.

The crosslinking in the crosslinking step may be performed in the state where the hydrophilic polymer impregnated in the porous substrate layer in the impregnation step may be crosslinked. Specifically, it is preferred that the crosslinking is performed before the whole solvent in the hydrophilic polymer solvent impregnated in the porous substrate layer in the impregnation step evaporates, that is, before the hydrophilic polymer is sufficiently dried.

The crosslinking conditions in the crosslinking step may be appropriately adjusted by variables such as the kind of hydrophilic polymers, the kind of crosslinking agents, and the use content thereof. Specifically, a crosslinking temperature and a crosslinking time may be the extent to which the crosslinking of the hydrophilic polymer is sufficiently performed, and for example, the ranges of a low temperature, room temperature, and a high temperature are all possible. As a specific example, the crosslinking may be performed at room temperature for 10 to 60 minutes, but is not limited thereto.

In the crosslinking step, the crosslinking solution includes a crosslinking agent and a solvent, and the solvent may be any solvent in which the crosslinking agent may be dissolved, and as an example, may be water, an organic solvent, or a mixed solvent thereof. Here, the content of the crosslinking agent is not largely limited, but for example, may be 0.1 to 5 wt%, specifically 0.5 to 3 wt% of the crosslinking agent with respect to the total weight of the crosslinking solution. However, this is described as a preferred example, and the present disclosure is not interpreted as being limited thereto.

In the ion exchange layer formation step, the one or both surfaces of the porous substrate layer are coated with the ion exchange resin solution to form the ion exchange layer, and specifically, the ion exchange resin solution forms a layer on one or both surfaces of the porous substrate layer, and then, the ion exchange layer may be formed by a drying process. Here, a drying temperature and a drying time may be the extent to which the curing of the polymer having an ion exchange group is sufficiently performed, and for example, the ranges of a low temperature, room temperature, and a high temperature are all possible.

The ion exchange resin solution has a polymer having the ion exchange group described above and a solvent, and has a specific viscosity to exhibit adhesive properties. Here, the content of the polymer having an ion exchange group is not largely limited, but for example, may be 1 to 30 wt%, specifically 3 to 20 wt% of the polymer having an ion exchange group with respect to the total weight of the ion exchange resin solution. The solvent may be any solvent in which a polymer having an ion exchange group may be dissolved, and may be an organic solvent including any one or two or more selected from N-methyl-2-pyrrolidone, dimethylformamide, dimethylacetamide, acetone, chloroform, dichloromethane, trichloroethylene, ethanol, methanol, normal hexane, and the like. However, this is described as a specific example, and the present disclosure is not interpreted as being limited thereto.

As the treatment method of each solution in each step, various methods may be used, and for example, a spraying method, a dipping method, dip coating, knife casting, doctor blade, spin coating, a calendering method, and the like may be included, and a drying step may be further performed later. In the drying step, various drying means such as infrared drying and hot air drying may be used. In the crosslinking step, various methods may be used in the crosslinking, and here, since temperature, time, humidity, pressure, and the like may be appropriately controlled, they are not limited.

Hereinafter, the present disclosure will be described in detail by the Examples, however, the Examples are for describing the present disclosure in more detail, and the scope of the present disclosure is not limited to the following Examples.

### [Example 1]

### <Manufacture of porous substrate layer filled with crosslinked hydrophilic polymer>

A porous sheet made of polyethylene having an average pore size of 0.3 um, a porosity of 50%, and an average thickness of 25 um was immersed in a polyvinyl alcohol (PVA) (weight average molecular weight: 1,000 g/mol) aqueous solution having a concentration of 10 wt% in a reactor for 30 minutes for impregnation. Subsequently, the porous sheet impregnated with the polyvinyl alcohol aqueous solution was taken out of the reactor and the polyvinyl alcohol aqueous solution remaining on the surface of the porous sheet exposed to the outside was removed with a tissue. Thereafter, the porous substrate was immersed and impregnated in a glutaraldehyde (GA) aqueous solution having a concentration of 2 wt% to crosslink polyvinyl alcohol filled into the pores of the porous substrate. At this time, a glutaraldehyde aqueous solution containing 1.5 wt% of 0.1 M hydrochloric acid (HCl) with respect to glutaraldehyde was used.

### <Formation of ion exchange layer>

A cation exchange ionomer solution (ICS, 20 wt% in n-methyl-2-pyrrolidone, Innochemtech Co., Ltd.) and an anion exchange ionomer solution (ITA, 15 wt% in n-methyl-2-pyrrolidone, Innochemtech Co., Ltd.) were calendered at a thickness of 15 µm, respectively for coating, on one and the other surface of the porous sheet filled with the crosslinked polyvinyl alcohol. Subsequently, an infrared oven was used to perform sufficient drying at 40°C to manufacture a capacitive deionization electrode laminate including the porous substrate layer filled with polyvinyl alcohol and an ion exchange layer laminated on both surfaces of the porous substrate layer.

### <Manufacture of capacitive deionization device>

An n-methyl-2-pyrrolidone (NMP) solution was sprayed on the surface of the ion exchange layer of the capacitive deionization electrode laminate, and joined on a carbon electrode to manufacture a capacitive deionization electrode. A capacitive deionization electrode unit cell was manufactured using a pair of capacitive deionization electrodes by the method, and deionization performance was measured.

In the measurement of the deionization performance, a pair of electrode bodies formed in a size of 10 cm×10 cm was used as the capacitive deionization electrode unit cell, and the deionization performance was tested under the measurement conditions of a sodium chloride (NaCl) aqueous solution having a concentration of 260 ppm being injected at a flow rate of 30 ml/min to the cell, with the cycle of adsorption at 1.5 V for 2 minutes and desorption at -1.5 V for 2 minutes.

### [Comparative Example 1]

The process was performed in the same manner as in Example 1, except that the ion exchange layer was formed directly on an untreated porous sheet instead of the porous sheet filled with crosslinked polyvinyl alcohol.

### [Comparative Example 2]

The process was performed in the same manner as in Example 1, except that the ion exchange layer was joined as it was on the carbon electrode, without using the porous sheet filled with crosslinked polyvinyl alcohol.

### [Comparative Example 3]

The process was performed in the same manner as in Example 1, except that the inside of pores of the porous sheet was filled with polyvinyl alcohol and polyvinyl alcohol was not crosslinked.

The deionization performance per unit use content of the ion exchange ionomer of the capacitive deionization electrodes manufactured in Example 1 and Comparative Examples 1 and 2 was tested, and the results therefor are shown in the following Table 1:

**[Table 1]**

| | Deionization rate/ weight of ion exchange layer used per unit volume of electrode (%/g) |
|---|---|
| Example 1 | 57.7 |
| Comparative Example 1 | 27.9 |
| Comparative Example 2 | 11.7 |

As a result, though the contents of the ion exchange ionomer used in Comparative Examples 1 and 2, in particular, Comparative Example 2 were about 5 times or more much higher than that in Example 1, the ion removal rate was not significantly high as compared with Example 1, and the deionization performance/ weight of the ion exchange layer used per unit volume of the electrode (%/g) of Comparative Example 1 was 5 times or more lower than that of Example 1. In addition, likewise, though the content of the ion exchange ionomer used in Comparative Example 1 was about 2 times higher than that of Example 1, the deionization performance/ weight of the ion exchange layer used per unit volume of the electrode (%/g) was about 2-3 times lower than that of Example 1.

In the present disclosure, as in Example 1, the inside of the porous substrate (reinforcing material) was filled with the crosslinked hydrophilic polymer to significantly decrease the amount of high-priced ion exchange ionomer used, and in particular, the deionization performance was not significantly lowered even with the significant decrease of the amount of the ion exchange ionomer used. In addition, since the crosslinked polymer was fixed in the pores of the porous substrate, the shrinkage of the polymer which may occur in the process of coating and drying the ion exchange ionomer on the surface of the substrate was prevented, so that the ion exchange membrane may be easily formed only by using a conventional uniaxial tension coating device. In Comparative Example 1 in which the crosslinked hydrophilic polymer was not filled thereinto, durability may be lowered, and when the device receives tension on one axis, the ion exchange membrane is dried, so that it is difficult to manufacture an even film due to shrinkage, and in order to solve the problem, the film should be biaxially fixed, resulting in the burden of the device cost in the process.

In addition, when a non-crosslinked hydrophilic polymer was used as in Comparative Example 3, problems such as the hydrophilic polymer being not stably bound to the surface of the pores of the porous substrate which was a hydrophobic surface may arise, it was difficult to secure the structural stability of the laminate, and it was difficult to practically implement excellent deionization performance for a long time.

## Claims

1. A capacitive deionization electrode laminate comprising: a porous substrate layer, and an ion exchange layer laminated on one or both surfaces of the porous substrate layer, wherein an inside of pores of the porous substrate is filled with a crosslinked hydrophilic polymer.

2. The capacitive deionization electrode laminate of claim 1, wherein the hydrophilic polymer includes a vinyl alcohol-based polymer.

3. The capacitive deionization electrode laminate of claim 2, wherein the crosslinked hydrophilic polymer is formed by reacting the vinyl alcohol-based polymer with a crosslinking agent.

4. The capacitive deionization electrode laminate of claim 3, wherein the crosslinking agent includes any one or more selected from aldehyde-based compounds and amine-based compounds.

5. The capacitive deionization electrode laminate of claim 1, wherein the porous substrate layer has an average thickness of 5 to 50 um.

6. The capacitive deionization electrode laminate of claim 1, wherein the porous substrate layer has an average pore size of 0.05 to 50 um and a porosity of 20 to 70%.

7. The capacitive deionization electrode laminate of claim 1, wherein the ion exchange layer has an average thickness of 0.1 to 30 um.

8. The capacitive deionization electrode laminate of claim 1, wherein the porous substrate layer has a material including a hydrophobic polymer.

9. A capacitive deionization electrode comprising: the capacitive deionization electrode laminate of any one of claims 1 to 8, and a carbon electrode laminated on one or both surfaces of the laminate.

10. A method of manufacturing a capacitive deionization electrode laminate comprising:
an impregnation step of impregnating a porous substrate layer with a hydrophilic polymer solution,
a crosslinking step of coating the hydrophilic polymer-coated porous substrate layer with a crosslinking solution to form a crosslinked hydrophilic polymer inside pores of the porous substrate layer; and
an ion exchange layer formation step of coating one or both surfaces of the porous substrate layer filled with the crosslinked hydrophilic polymer with an ion exchange resin solution.

11. The method of manufacturing a capacitive deionization electrode laminate of claim 10, wherein the hydrophilic polymer includes a vinyl alcohol-based polymer.

12. The method of manufacturing a capacitive deionization electrode laminate of claim 11, wherein in the crosslinking step, the crosslinking solution includes any one or more crosslinking agents selected from aldehyde-based compounds and amine-based compounds.
